# EUROPÄISCHE PATENTSCHRIFT

(11) **EP 0 496 700 B1**
(45) Veröffentlichungstag und Bekanntmachung des Hinweises auf die Patenterteilung: **06.03.1996**
(21) Anmeldenummer: 92810026.2
(22) Anmeldetag: 16.01.1992
(51) Int. Cl.: C07F 9/655, C07F 15/00, B01J 31/24, B01J 31/00

(54) **Silangruppen enthaltende Diphosphine, immobilisierte Diophoshine und deren Verwendung als Hydrierkatalysatoren**
Diphosphines containing silane groups, immobilized diphosphines and their use as hydrogenation catalysts
Diphosphines contenant des groupes silane, diphosphines immobilisées et leur utilisation comme catalyseurs d'hydrogenation

(30) Priorität: 25.01.1991 CH 218/91
(43) Veröffentlichungstag der Anmeldung: 29.07.1992
(73) Patentinhaber: CIBA-GEIGY AG, CH-4002 Basel (CH)
(72) Erfinder: Pugin, Benoit, Dr., CH-4142 Münchenstein (CH); Spindler, Felix, Dr., CH-4656 Starrkirch-Wil (CH); Müller, Manfred, Dr., CH-6252 Dagmersellen (CH)

(56) Entgegenhaltungen:
- REACTION KINETICS AND CATALYSIS LETTERS, Band 7, Nr. 2, 1977, Seiten 199-204;I. KOLB et al.: "A rhodium-diop complex attached to an inorganic support ascatalyst for enantioselective syntheses"

## Beschreibung

Die vorliegende Erfindung betrifft Silangruppen enthaltende Dioxalan-Diphosphine, solche an ein festes Trägermaterial gebundene Dioxalan-Diphosphine und deren Verwendung in Form von Rhodium- oder Iridium-Komplexen zur Hydrierung von Verbindungen mit olefinischen Doppelbindungen oder Kohlenstoff-/Heteroatomdoppelbindungen, besonders zur enantioselektiven Hydrierung unter Verwendung von chiralen Dioxalan-Diphosphinen.

In den EP-A-0 256 982, EP-A-0 302 021 und EP-A-0 301 457 wird die enantioselektive Hydrierung von Ketiminen zu optisch aktiven sekundären Aminen mit Hilfe von chiralen Rhodium- und Iridiumdiphosphinkomplexen als homogene Katalysatoren beschrieben. Die teuren Katalysatoren können jedoch nicht oder nur mit aufwendigen Trennmethoden zurückgewonnen werden, was stets mit unerwünschten Verlusten verbunden ist. Darüber hinaus weisen diese Katalysatoren im Verlaufe der ersten Reaktion einen hohen Aktivitätsverlust auf, so dass die direkte Wiederverwendung in weiteren Hydrierverfahren mit hohen Ausbeuteverlusten verbunden und daher unwirtschaftlich ist. Es besteht ein Bedarf an leicht abtrennbaren und wiederverwendbaren Katalysatoren, wobei deren Aktivität und besonders deren Selektivität weitgehend erhalten bleiben.

K. Achiwa beschreibt im J. Chem. Japan. Soc., Chemistry Letters, Seiten 905 bis 908 (1978) Polystyrolcopolymere, deren Benzolreste mit Rhodium komplexierte Pyrrolidin-diphosphin-N-carbonylgruppen enthalten. Die Synthese der Monomeren ist schwierig und die Hydrierung von prochiralen Olefinen mit diesen heterogenen Katalysatoren ist mit einer Erniedrigung der Enantioselektivität verbunden.

U. Nagel et al. offenbaren in J. Chem. Soc., Chem. Commun., Seiten 1098-1099 heterogene Rhodium-Katalysatoren für die enantioselektive Hydrierung von α-(Acetylamino)zimtsäure. Die Katalysatoren sind mit Rhodium komplexierte Pyrrolidin-Diphosphine, an deren N-Atom ein Triethoxysilyl-n-propyl-dicarbonsäueremonoamidrest gebunden ist, und die auf Silicagel als festem Trägermaterial aufgebracht sind. Es werden im Vergleich zu den Monomeren zwar gleich gute Selektivitäten erzielt, aber der Aktivitätsverlust ist hoch und reduziert die Wiederverwendbarkeit.

I. Kolb et al. beschreiben in React. Kinet. Catal. Lett. 7(2), Seiten 199 bis 204 (1977) chirale heterogene Rhodiumkatalysatoren, die auf Silikagel als festem Träger aufgebracht sind. Als chiraler und an einen festen Träger fixierbarer Komplexbildner wird 2,3-(5'-triethoxysilyl-2'-pentylidendioxyl)-1,4-bis(diphenylphosphino)butan verwendet. Bei der Hydrierung von von α-Acetamidozimtsäure wird gegenüber den monomeren Rhodiumkatalysatoren ein starker Aktivitätsverlust und Selektivitätsverlust beobachtet.

Ein Gegenstand der Erfindung sind Verbindungen der Formel I 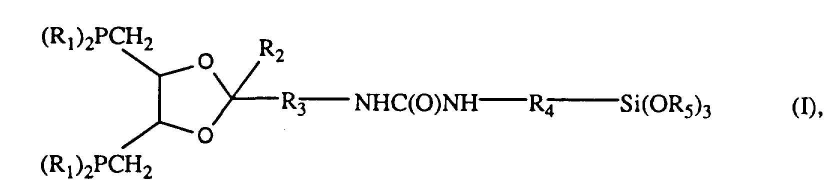 worin R₁ gleiche oder verschiedene Reste darstellt und für lineares oder verzweigtes C₁-C₁₂-Alkyl, unsubstituiertes oder mit C₁-C₄-Alkyl oder C₁-C₄-Alkoxy substituiertes C₅- oder C₆-Cycloalkyl, Phenyl oder Benzyl steht, oder beide R₁ einer Gruppe (R₁)₂P für o,o'-Diphenylen stehen, R₂ Wasserstoff, lineares oder verzweigtes C₁-C₁₂-Alkyl, Phenyl oder Benzyl darstellt, R₃ C₁-C₁₂-Alkylen bedeutet, R₄ C₂-C₁₈-Alkylen, Phenylen oder Benzylen darstellt, und R₅ C₁-C₆-Alkyl oder Phenyl bedeutet.

R₁ enthält als Alkyl bevorzugt 1 bis 8, besonders bevorzugt 1 bis 4 C-Atome. Beispiele für Alkyl sind Methyl, Ethyl und die Isomeren von Propyl, Butyl, Pentyl, Hexyl, Heptyl, Octyl, Nonyl, Decyl, Undecyl und Dodecyl. Als Alkyl- und Alkoxysubstituenten kommen insbesondere Methyl, Ethyl, Methoxy und Ethoxy in Frage. Beispiele für Cycloalkyl sind Cyclopentyl und Cyclohexyl. In einer besonders bevorzugten Ausführungsform bedeutet R₁ Phenyl.

R₂ enthält als Alkyl bevorzugt 1 bis 6 und besonders bevorzugt 1 bis 4 C-Atome. Beispiele sind für R₁ erwähnt worden. In einer bevorzugten Ausführungsform stellt R₂ Wasserstoff, Methyl, Ethyl, n- oder i-Propyl, n-, i- oder t-Butyl dar.

R₃ kann als Alkylen linear oder verzweigt sein und enthält bevorzugt 1 bis 8 und besonders bevorzugt 1 bis 6 C-Atome. Beipiele sind Methylen, Ethylen, 1,2- und 1,3-Propylen, 1,2-, 1,3- und 1,4-Butylen und die Isomeren von Pentylen, Hexylen,Heptylen, Octylen, Nonylen, Decylen, Undecylen und Dodecylen. Besonders bevorzugte Alkylenreste sind Ethylen, 1,2-Propylen, 1,3-Propylen, 1,2-, 1,3- und 1,4-Butylen, 1,2-, 1,3-, 1,4- und 1,5-Pentylen und 1,2-, 1,3-,1,4-,1,5- und 1,6-Hexylen.

R₄ kann als Alkylen linear oder verzweigt sein und enthält bevorzugt 2 bis 12 C-Atome. Beispiele sind Ethylen und die Isomeren von Propylen, Butylen, Pentylen, Hexylen, Heptylen, Octylen, Nonylen, Decylen, Undecylen, Dodecylen, Tridecylen, Tetradecylen, Hexadecylen und Octadecylen. Bevorzugt handelt es sich bei R₄ um lineares oder verzweigtes Alkylen mit 3 bis 12 C-Atomen, zum Beispiel 1,3-Propylen oder 1,11-Undecylen.

R₅ bedeutet bevorzugt C₁-C₄-Alkyl und besonders bevorzugt Methyl oder Ethyl.

Die Verbindungen der Formel I liegen bevorzugt in Form der optischen R,R- beziehungsweise S,S-Isomeren vor, bezogen auf die Stellung der Phosphin(methyl)-Gruppen.

In einer besonders bevorzugten Ausführungsform bedeuten in Formel I R₁ Phenyl, R₂ Methyl oder Ethyl, R₃ lineares C₂-C₄-Alkylen, besonders 1,3-Propylen, R₄ lineares C₃-C₆-Alkylen und R₅ Methyl oder Ethyl.

Ein weiterer Gegenstand der Erfindung ist ein Verfahren zur Herstellung von Verbindungen der Formel I, das dadurch gekennzeichnet ist, dass man eine Verbindung der Formel II

(R₅O)₃Si-R₄-NCO (II),

worin R₄ und R₅ die zuvor angegebenen Bedeutungen haben, mit einer Verbindung der Formel III 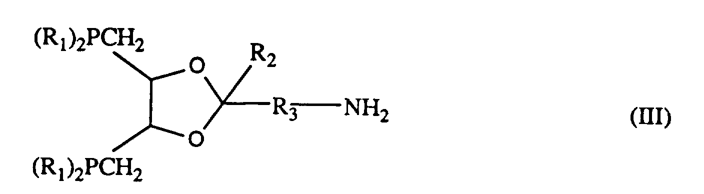 umsetzt, worin R₁, R₂ und R₃ die zuvor angegebenen Bedeutungen haben.

Die Verbindungen der Formel II sind bekannt und teilweise käuflich, oder sie können nach einem in der FR-A-1 371 405 beschriebenen Verfahren hergestellt werden. Die Verbindungen der Formel III sind neu und können nach folgenden analogen Verfahren hergestellt werden:

Die Umsetzung eines Alkalimetallimids, z. B. Li-, Na- oder K-Phthalimid mit einem entsprechenden Halogenketon, z. B. Chlor- oder Bromketon, ergibt die entsprechenden Imidketone, die man zu den Ketalen derivatisiert, z. B. mit Orthoameisensäuremethylester. Das Ketal wird anschliessend mit dem bekannten 2,3-Dihydroxy-1,4-bis(diphenylphosphin)butan umgesetzt und danach durch Hydrolyse oder Umimidierung mit z. B. Hydrazinhydrat die Verbindungen der Formel III hergestellt. Weitere Einzelheiten sind in den Herstellungsbeispielen angegeben. Die Verbindungen der Formel III sind ebenfalls ein Gegenstand der Erfindung, wobei für R₁, R₂ und R₃ die zuvor angebenen Bevorzugungen gelten.

Die Umsetzung der Isocynate der Formel II mit den Verbindungen der Formel III kann bei Raumtemperatur oder erhöhter Temperatur, zum Beispiel 0 bis 150 °C erfolgen. Zweckmässig wird ein Lösungsmittel mitverwendet, zum Beispiel ein Kohlenwasserstoff (Petrolether, Pentan, Hexan, Cyclohexan, Methylcyclohexan, Benzol, Toluol oder Xylol) oder ein Halogenkohlenwasserstoff (Methylenchlorid, Chloroform, 1,1,2,2-Tetrachlorethan und Chlorbenzol). Ein Ueberschuss an Isocyanat kann nach der Reaktion durch die Umsetzung mit einem Alkanol entfernt werden. Die Isolierung und Reinigung der erfindungsgemässen Verbindungen erfolgt durch übliche Methoden, zum Beispiel durch Destillation oder chromatographische Verfahren.

Bei den erfindungsgemässen Verbindungen handelt es sich im allgemeinen um ölige Flüssigkeiten, die als chirale Liganden für Iridium(I)- und Rhodium(I)-Komplexe und -Komplexsalze verwendet werden können, die ausgezeichnete homogene enantioselektive Hydrierkatalysatoren sind. Die Herstellung solcher Katalysatoren ist zum Beispiel in der EP-A-0 256 982 beschrieben. Die erfindungsgemässen Verbindungen sind besonders zur Herstellung von heterogenen, an einem festen Trägermaterial gebundenen enantioselektiven Hydrierkatalysatoren geeignet.

Ein weiterer Gegenstand der Erfindung ist ein festes Trägermaterial, das an der Oberfläche chirale Diphosphin-Rhodium- oder -Iridiumkomplexe gebunden enthält, dadurch gekennzeichnet, dass es den Formeln IV und IVa entspricht, 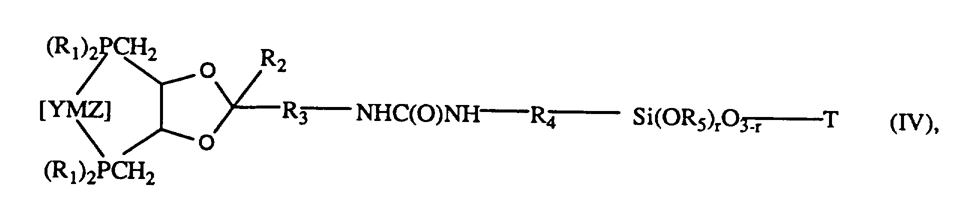 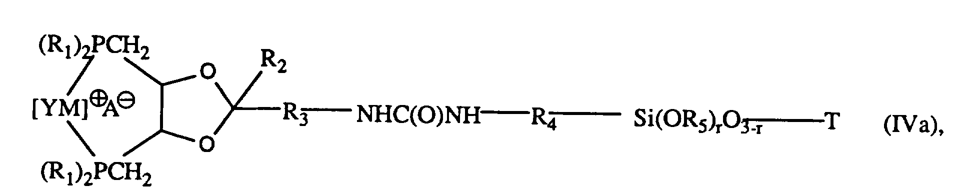 worin Y für zwei Monoolefinliganden oder einen Dienliganden steht, M Ir(I) oder Rh(I) bedeutet, Z -Cl, -Br oder -I darstellt, A^{⊖} das Anion einer Sauerstoffsäure oder Komplexsäure ist, T für ein festes Trägermaterial steht, r 0, 1 oder 2 darstellt, und R₁, R₂, R₃, R₄,und R₅ die zuvor angegebenen Bedeutungen haben. Für R1, R₂, R₃, R₄ und R₅ gelten die gleichen Bevorzugungen wie für die Verbindungen der Formel I.

Y enthält als Monoolefinligand bevorzugt 2 bis 6, besonders bevorzugt 2 bis 4 C-Atome. Beispiele sind Hexen, Penten, Buten, Propen und besonders Ethen. Y enthält als Dienligand bevorzugt 4 bis 8, besonders bevorzugt 6 bis 8 C-Atome. Es kann sich um offenkettige oder cyclische Diene handeln, deren Olefingruppen bevorzugt über ein oder zwei C-Atome verknüpft sind. Bevorzugte Diene sind 1,5-Hexadien, 1,5-Cycloactadien und Norbornadien.

In der Formel IV steht Z bevorzugt für -Cl oder -Br. A^{^{⊖}} in Formel IVa steht bevorzugt für ClO₄ ^{⊖}, CF₃SO₃ ^{⊖} , BF₄ ^{⊖}, B(Phenyl)₄ ^{⊖}, PF₆ ^{⊖}, SbCl₆ ^{⊖}, AsF₆ ^{⊖} oder SbF₆ ^{⊖}.

Bei dem festen Trägermaterial handelt es bevorzugt um Glas, Silikate und Halbmetall- oder Metalloxide, die besonders bevorzugt als Pulver mit mittleren Teilchendurchmessern von 10 nm bis 2000 µm, bevorzugt 10nm bis 1000 µm und insbesondere bevorzugt 10nm bis 500 µm vorliegen. Es kann sich um kompakte oder poröse Teilchen handeln. Poröse Teilchen weisen bevorzugt hohe innere Oberflächen auf, zum Beispiel 1 bis 1200 m, bevorzugt 30 bis 600 m. Beispiele für Oxide und Silikate sind SiO₂, TiO₂, ZrO₂, MgO, NiO, WO₃, Al₂O₃, La₂O₃, Silicagele, Tone und Zeolithe. Als festes Trägermaterial kommt auch Aktivkohle in Frage. Ferner kann das feste Trägermaterial durch Polysiloxane gebildet sein, die durch Kondensation von Verbindungen der Formel I alleine oder zusammen mit Alkoxysilanen erhältlich sind. Bevorzugte Trägermaterialien sind

Silicagele, Aerosile, Aluminiumoxid, Titanoxid und deren Gemische. Ein Beispiel für Glas als Trägermaterial ist "Controlled Pore Glass", das käuflich ist.

Das erfindungsgemäss modifizierte Trägermaterial ist erhältlich, indem man ein festes Trägermaterial, das an der Oberfläche Diphoshine gebunden enthält und das der Formel V entspricht, 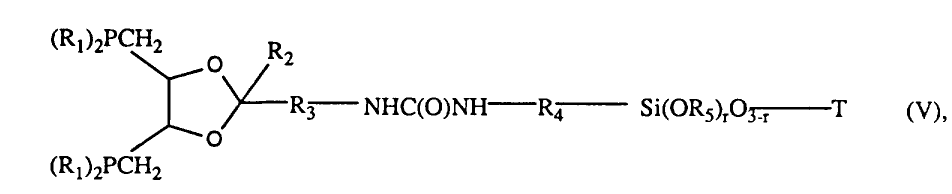 worin R₁, R₂, R₃, R₄, R₅, T und r die zuvor angegebenen Bedeutungen haben, mit einer Metallverbindung der Formeln [M(Y)Z]₂ oder M(Y)₂ ^{⊕}A^{⊖} umsetzt, worin M, Y, Z und A^{⊖} die zuvor angegebenen Bedeutungen haben.

Die Umsetzung wird vorteilhaft unter Inertgasatmosphäre, zum Beispiel Argon, und zweckmässig bei Temperaturen von 0 bis 40 °C, bevorzugt Raumtemperatur, vorgenommen. Vorteilhaft wird ein Lösungsmittel oder Lösungsmittelgemische mitverwendet, zum Beispiel Kohlenwasserstoffe (Benzol, Toluol, Xylol), halogenierte Kohlenwasserstoffe (Methylenchlorid, Chloroform, Tetrachlorkohlenstoff, Chlorbenzol), Alkanole (Methanol, Ethanol, Ethylenglykolmonomethylether), und Ether (Diethylether, Dibutylether, Ethylenglykoldimethylether, Tetrahydrofuran) oder Gemische davon.

Das erfindungsgemäss modifizierte Material ist auch durch die direkte Umsetzung von einem Hydroxylgruppen enthaltenden festen Material, einer Verbindung der Formel I und einer Metallverbindung der Formeln [M(Y)Z]₂ oder M(Y)₂ ^{⊕}A^{⊖} erhältlich. Die Reaktion kann stufenweise durch zunächst Zugabe einer Lösung der Verbindung der Formel I zum festen Material und die nachfolgende Zugabe einer Lösung der Metallverbindung erfolgen, oder man löst zunächst die Verbindungen der Formel I und die Metallverbindungen in einem Lösungsmittel und gibt diese Lösung zu dem festen Material. Hierbei können die zuvor bzw. nachfolgend für die Herstellung des festen Materials der Formel V beschriebenen Reaktionsbedingungen angewendet werden. Das erfindungsgemäss modifizierte Material kann durch Filtration isoliert und durch Waschen mit Alkanolen gereinigt und im Vakuum getrocknet werden.

Das erfindungsgemäss modifizierte Material kann auch vor einer Hydrierung in situ hergestellt und dann direkt als Hydrierkatalysator eingesetzt werden.

Ein weiterer Gegenstand der Erfindung ist das der Formel V entsprechende feste Material. Es kann durch die Umsetzung von Verbindungen der Formel I mit einem Hydroxylgruppen enthaltenden festen Trägermaterial hergestellt werden, wobei vorteilhaft unter Inertgas, zum Beispiel Argon, und bei Temperaturen von 40 bis 180 °C gearbeitet wird. Zweckmässig wird das feste Material in einem Reaktionsgefäss vorgelegt, eine Lösung der Verbindung der Formel I zugegeben und die Mischung bei erhöhter Temperatur, zum Beispiel 50 bis 110 °C, gerührt. Geeignete Lösungsmittel sind zuvor erwähnt worden. Zur Isolierung kann entweder abdekantiert oder filtriert werden. Der Rückstand kann durch Waschen mit einem Alkanol gereinigt und dann im Hochvakuum getrocknet werden.

Das erfindungsgemäss modifizierte Material eignet sich hervorragend als heterogener Katalysator zur enantioselektiven Hydrierung von Verbindungen mit prochiralen Kohlenstoff- und Kohlenstoff-/ Heteroatomdoppelbindungen, zum Beispiel Verbindungen, die die Gruppen C=C, C=N, C=O, C=C-N oder C=C-O enthalten ( siehe zum Beispiel K. E. König, The Applicability of Asymmetric Homogeneous Catalysis, in James D. Morrison (ed.), Asymmetric Synthesis, Vol. 5, Academic Press, 1985). Beispiele für solche Verbindungen sind prochirale Immine und Ketone.Die erfindungsgemässen Katalysatoren können nach der Reaktion in einfacher Weise, zum Beispiel durch Dekantieren oder Filtration, praktisch vollständig vom Reaktionsgemisch abgetrennt und anschliessend wiederverwendet werden. Es wird gegenüber bekannten homogenen Katalysatoren kein oder nur ein geringer Aktititätsverlust beobachtet, der gewünschtenfalls durch die Zugabe von geringen Mengen frischen Katalysators ausgeglichen werden kann. Darüber hinaus werden gegenüber homogenen Katalysatoren vergleichbare Selektivitäten (optische Ausbeuten) erzielt. Bei der Hydrierung von N-Arylketiminen mit erfindungsgemässen Iridium-Katalysatoren wurde überraschend gefunden, dass bei vergleichbaren Selektivitäten sogar eine höhere Katalysatoraktivität und eine wesentlich geringere Desaktivierung auftritt als bei den in den EP-A-0 256 982 und EP-A-0 301 457 beschriebenen homogenen Iridium-Katalysatoren.

Ein weiterer Gegenstand der Erfindung ist die Verwendung des festen Trägermaterials der Formeln IV und IVa als heterogene Katalysatoren zur asymmetrischen Hydrierung von prochiralen Verbindungen mit Kohlenstoff- oder Kohlenstoff-/Heteroatomdoppelbindungen, besonders mit Gruppen C=C, C=N, C=O, C=C-N oder C=C-O. Bevorzugt ist die Verwendung zur Hydrierung von unsymmetrischen Kohlenstoffdoppelbindungen, Ketiminen und Ketonen. Das erfindungsgemässe als Iridium-Katalysator ausgebildete feste Trägermaterial der Formeln IV und IVa wird auch bevorzugt zur Hydrierung von prochiralen N-Arylketiminen zu optisch aktiven sekundären Aminen verwendet. Das erfindungsgemässe als Rhodiumkatalysator ausgebildete feste Trägermaterial wird bevorzugt zur Hydrierung von Kohlenstoffdoppelbindungen, besonders prochiralen Kohlenstoffdoppelbindungen verwendet.

Ein anderer Gegenstand der Erfindung ist ein Verfahren zur asymmetrischen Hydrierung von Verbindungen mit Kohlenstoff- oder Kohlenstoff-/Heteroatomdoppelbindungen, das dadurch gekennzeichnet ist, dass man die Verbindungen bei einer Temperatur von -20 bis 80 °C und einem Wasserstoffdruck von 10⁵ bis 10⁷ Pa in Gegenwart katalytischer Mengen eines festen Trägermaterials der Formeln IV oder IVa hydriert.

Es wurde ferner überraschend gefunden, dass Iridiumkatalysatoren auf Basis des von I. Kolb et al. in React. Kinet. Catal. Lett.7(2), Seiten 199 bis 204 (1977) beschriebenen fixierbaren Liganden gegenüber den entsprechenden monomeren Iridiumkatalysatoren, die nach einer Hydrierung praktisch inaktiv sind, nur einen geringen Aktivitätsverlust aufweisen.

Ein weiterer Gegenstand der Erfindung sind Trägermaterialien der Formeln VI und VIa 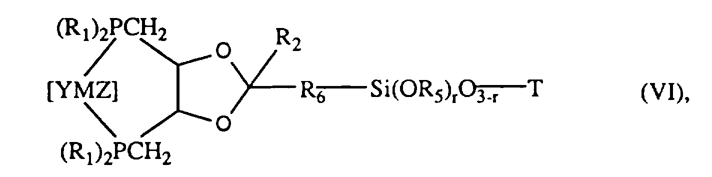 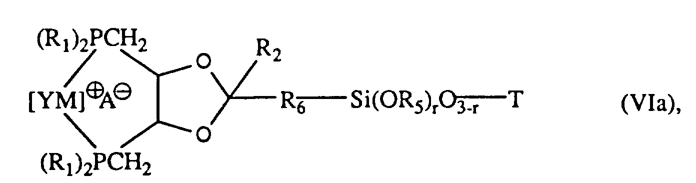 worin R₁, R₂, R₅,Y, Z, A^{⊖}, T und r die zuvor angegebenen Bedeutungen haben, einschliesslich der Bevorzugungen, M für Iridium(I) und R₆ für lineares oder verzweigtes C₂-C₁₈-Alkylen stehen.

R₆ stellt bevorzugt lineares oder verzweigtes C₂-C₁₂-, besonders bevorzugt C₂-C₁₀-Alkylen dar, zum Beispiel 1,3-Propylen, 1,4-Butylen, 1,5-Pentylen und 1,6-Hexylen.

Die Trägermaterialien der Formeln VI und VIa können nach den zuvor beschriebenen Verfahren hergestellt werden. Die hierfür verwendeten Silanverbidungen können zum Beispiel nach dem von I. Kolb et al. in React. Kinet. Catal. Lett.7(2), Seiten 199 bis 204 (1977) beschriebenen Verfahren hergestellt werden.

Ein weiterer Gegenstand der Erfindung ist die Verwendung des festen Trägermaterials der Formeln VI und VIa als heterogene Katalysatoren zur asymmetrischen Hydrierung von prochiralen N-Arylketiminen zu optisch aktiven sekundären Aminen.

Ein anderer Gegenstand der Erfindung ist ein Verfahren zur asymmetrischen Hydrierung von prochiralen N-Arylketiminen zu optisch aktiven sekundären Aminen, das dadurch gekennzeichnet ist, dass man die N-Arylketimine bei einer Temperatur von -20 bis 80 °C und einem Wasserstoffdruck von 10⁵ bis 10⁷ Pa in Gegenwart katalytischer Mengen eines festen Trägermaterials der Formeln VI oder VIa hydriert.

Bevorzugte ungesättigte Verbindungen sind zuvor erwähnt worden. Unsymmetrische Ketimine und Ketone sind bekannt. In Frage kommende N-Arylketimine sind zum Beispiel in der EP-A- 0 256 982 beschrieben. N-aliphatische Ketimine sind zum Beispiel in der EP-A-0 301 457 beschrieben. Solche Imine können aus den entsprechenden unsymmetrische Ketonen hergestellt werden, die bekannt und teilweise käuflich oder nach bekannten Verfahren herstellbar sind. Geeignete, gegebenenfalls substituierte Alkene sind in der zuvor erwähnten Publikation von K. E. König erwähnt.

Das Verfahren wird bevorzugt bei einer Temperatur von -20 bis 50 °C und bevorzugt bei einem Wasserstoffdruck von 1·10⁵ bis 6·10⁶ Pa durchgeführt.

Die Menge des Katalysators wird bevorzugt so gewählt, dass das Molverhältnis der zu hydrierenden Verbindung zu dem auf dem festen Trägermaterial fixierten aktiven Katalysatorbestandteil bevorzugt 2000 bis 40, besonders bevorzugt 800 bis 50 beträgt.

Eine bevorzugte Verfahrensdurchführung ist dadurch gekennzeichnet, dass man zusätzlich ein Ammonium- oder Alkalimetallchlorid, -bromid oder -iodid mitverwendet, besonders bei der Verwendung erfindungsgemässer Iridium-Katalysatoren. Die Menge kann beispielsweise 0,1 bis 100, bevorzugt 1 bis 50 und besonders bevorzugt 2 bis 20 Aequivalente betragen, bezogen auf den auf dem Träger fixierten aktiven Katalysatorbestandteil. Der Zusatz von Iodiden ist bevorzugt. Ammonium ist bevorzugt Tetraalkylammonium mit 1 bis 6 C-Atomen in den Alkylgruppen, und als Alkalimetall ist Lithium, Natrium und Kalium bevorzugt.

Die Hydrierung kann ohne oder in Gegenwart von Lösungsmitteln durchgeführt werden. Geeignete Lösungsmittel, die alleine oder als Mischung von Lösungsmitteln eingesetzt werden können, sind zum Beispiel: Aliphatische und aromatische Kohlenwasserstoffe (Pentan, Hexan, Cyclohexan, Methylcyclohexan, Benzol, Toluol, Xylol), Alkohole (Methanol, Propanol, Butanol, Ethylenglykolmonomethylether), Ether (Diethylether, Diethylenglykoldimethylether, Tetrahydrofuran, Dioxan), Halogenkohlenwasserstoffe (Methylenchlorid, Chloroform, 1,1,2,2-Tetrachlorethan, Chlorbenzol), Carbonsäureester und Lactone (Essigsäureethylester, Butyrolacton, Valerolacton), N-substituierte Säureamide und Lactame (Dimethylformamid, N-Methylpyrrolidin). Vorteilhaft sind Mischungen aus einem aromatischen Kohlenwasserstoff und Alkoholen, zum Beispiel Toluol/Ethanol oder Benzol/Methanol.

Mit dem erfindungsgemässen Hydrierverfahren können optisch reine Verbindungen erhalten werden, die wertvolle Zwischenprodukte zur Herstellung biologisch aktiver Wirkstoffe besonders im Bereich der Pharmazeutika und Agrarchemikalien darstellen. So können zum Beispiel aus sekundären Aminen, besonders N-Carbalkoxymethylaminen, 5-Imidazolcarbonsäurederivate hergestellt werden, die eine herbizide Wirkung haben und zur Bekämpfung von Unkräutern verwendet werden können (EP-A-0 207 563). Die optisch reinen α-Aminocarbonsäureester sind für Peptidsynthesen geeignet.

Die nachfolgenden Beispiele erläutern die Erfindung näher. Die Reaktionen werden unter Argonatmosphäre durchgeführt. Die NMR-Spektren werden mit einem 250 MHz-Gerät aufgenommen. Prozente sind Gewichtsprozente.

### A) Herstellung von Ausgangsprodukten

### Beispiel A1: (-)-2,3-O-(5′-Amino-2′-pentyliden)-2,3-hydroxy-1,4-bis-(diphenylphosphin)-butan.

a) Herstellung von 5-Phthalimidyl-2,2-dimethoxy-pentan.
   Zu einer Lösung von 11,5 ml (0,1 Mol) 5-Chlor-2-pentanon in 100 ml Dimethylformamid werden 18,5 g (0,1 Mol) Phthalimid-Kalium und eine Spatelspitze Kaliumiodid gegeben und das Gemisch zunächst 15 Stunden bei 90 °C und dann während 5 Stunden bei 110 °C gerührt. Nach dem Abkühlen wird das Gemisch in 300 ml Wasser/100 ml Chloroform aufgenommen, die organische Phase abgetrennt und die wässrige Phase dreimal mit je 30 ml Chloroform extrahiert. Die organische Phase wird dann zweimal mit je 50 ml 0,2 n NaOH und zweimal mit je 25 ml Wasser gewaschen, über MgSO₄ getrocknet, das Lösungsmittel abgedampft und im Hochvakuum getrocknet.
   Es werden 16,6 g eines gelben festen Rückstandes erhalten, aus dem nach dem behandeln mit Diethylether 14 g 5-Phthalimidyl-2-pentanon in Form eines weissen Pulvers isoliert werden. Davon werden 8,3 g in 40 ml Methanol gelöst und mit 4,34 ml (0,04 Mol) Orthoameisensäuremethylester versetzt. Man gibt 0,2 g Pyridinium-toluolsulfonat zu und rührt eine Stunde am Rückfluss. Danach wird das Lösungsmittel am Rotationsverdampfer entfernt und der Rückstand mit 200 ml Wasser/Diethylether (1:1) und dann mehrmals mit insgesamt 100 ml Diethylether extrahiert. Die organische Phase wird zweimal mit 25 ml gesättigter wässriger Kochsalzlösung gewaschen, über Kaliumcarbonat getrocknet und das Lösungsmittel am Rotationsverdampfer entfernt. Man erhält 8,8 g eines dickflüssigen Oels, das direkt weiterverwendet wird.
b) Herstellung von (-)-2,3-O-(5'-Phthalimidyl-2'-pentyliden)-2,3-hydroxy-1,4-bis-(diphenylphosphin)-butan.
   Zu einer Lösung von 4,3 g (9,4 mmol) (-)-2,3-Dihydroxy-1,4-bis(diphenylphosphin)methyl-butan in 150 ml Toluol werden 8,8 g (32 mmol) 5-Phthalimidyl-2,2-dimethoxy-pentan in 50 ml Toluol und 350 mg p-Toluolsulfonsäure-monohydrat gegeben und langsam auf 120 bis 130 °C Aussentemperatur erwärmt. Danach wird solange entstehendes Methanol abdestilliert, bis der Siedepunkt von Toluol erreicht ist. Man lässt abkühlen und entfernt das Toluol am Rotationsverdampfer. Der Rückstand wird zweimal chromatographisch gereinigt (Silikagel Merck 60, 1. Laufmittel Toluol, 2. Laufmittel Toluol/Diethylether 1:1). Man erhält 3,9 g (58%) eines farblosen dickflüssigen Oels. ³¹P-NMR (CDCl₃): -23,22 (s) und -23,82 (s).
c) Man lässt zu 3,8 g des Oels in 40 ml Methanol 330 µl (6,8 mmol) Hydrazinhydrat zutropfen und erwärmt auf 100 °C. Dabei bildet sich langsam ein weisser Niederschlag. Nach 5 Stunden werden weitere 150 µl Hydrazinhydrat zugtropft und noch 19 Stunden gerührt. Die erhaltene Suspension wird abgekühlt, mit 50 ml Methanol verdünnt, filtriert der Rückstand mit 50 ml Ethanol gewaschen, und das Filtrat am Rotationsverdampfer bei 40 °C im Vakuum eingedampft. Der erhaltene Rückstand wird in 50 ml Methylenchlorid aufgenommen, filtriert, der Rückstand mit 25 ml Methylenchlorid gewaschen und das Filtrat am Rotationsverdampfer eingedampft. Man erhält ein dickflüssiges Oel, das chromatographisch gereinigt wird (Kieselgel Merck 60, Laufmittel Tetrahydrofuran/Triethylamin 10:1). Man isoliert 2,94 g (80%) eines farblosen dickflüssigen Oels. ³¹P-NMR (CDCl₃): -23,106 (s), -23,177 (s).¹H-NMR (CDCl₃): 2,6 (t, 2H, CH₂N).
d) Zu einer Lösung von 150 mg (0,277 mmol) dieses Oels in 5 ml Toluol werden 77,5 µl (0,31 mmol) 1-Triethoxysilyl-3-isocyanatopropan zugetropft und das Gemisch 20 Stunden bei Raumtemperatur gerührt. Anschliessend wird das Lösungsmittel am Rotationsverdampfer entfernt und der Rückstand im Hochvakuum getrocknet. Man erhält 210 mg (96 %) der Titelverbindung als Oel, das ohne weitere Reinigung bei den Folgereaktionen eingesetzt wird. ³¹P-NMR (CDCl₃): δ -23,12 (s), -23,44(s); ¹H-NMR (CDCl₃): δ 1,29 (s, 3 H, CH₃).

### B) Herstellung von Trägermaterialien mit fixierten Liganden.

### Beispiel B1:

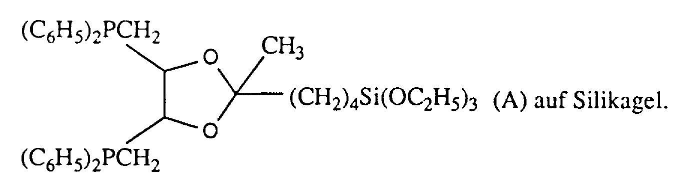

10 g Silikagel (Merck 100) werden in einem Rundkolben unter Rühren bei 130 °C im Hochvakuum getrocknet und dann unter Argon auf Raumtemperatur abgekühlt. Danach wird eine Lösung von 1 g der Verbindung (A) in 60 ml trockenem und entgasten Toluol zugegeben und während 5,5 Stunden bei 70 °C langsam gerührt. Man lässt abkühlen und saugt die überstehende Lösung vom Silikagel ab. Man wäscht fünfmal mit entgastem Methanol und trocknet anschliessend bei 30 °C im Hochvakuum. Durch Elementaranalyse wird ein Phosphorgehalt von 0,37 & ermittelt, was 60 µmol fixierter Verbindung pro g Silikagel entspricht.

### Beispiel B2: Verbindung gemäss Beispiel A1 auf Silikagel.

3 g Silikagel (Merck 100) werden in einem 100 ml Schlenkgefäss unter Rühren bei 130 °C im Hochvakuum getrocknet und dann unter Argon auf Raumtemperatur abgekühlt. Danach wird eine Lösung von 330 mg (0,418 mMol) der Verbindung Al in 14 ml trockenem und entgastem Toluol zugegeben und während 5 Stunden bei 70 °C langsam gerührt. Man lässt abkühlen und saugt die überstehende Lösung vom Silikagel ab. Man wäscht 5 mal mit entgastem Methanol und trocknet anschliessend bei 30 °C im Hochvakuum. Durch Elementaranalyse wird ein Phosphorgehalt von 0,54 % ermittelt, was 86 µmol fixierter Verbindung Al pro g Silikagel entspricht.

### C) Anwendungsbeispiele

### Beispiel C1: Hydrierung mit Iridium-Katalysator.

3,6 mg (5,4 µmol [Ir(Cyclooctadien)Cl]₂, 13 µmol Trägermaterial gemäss Beispiel B1 und 2 Aequivalente Tetra-n-butylammoniumiodid/Mol Ir werden zusammen mit 2 ml Methanol und 2 ml Benzol unter Argon in einen Rundkolben gegeben und bis zur Entfärbung der Lösung gerührt. Dann lässt man eine Lösung von 1033 mg N-(2,6-Dimethylphen-1-yl)-methoxymethyl-methylketimin in 1,5 ml Methanol und 1,5 ml Benzol zutropfen und presst das Gemisch in einen 50 ml Stahlautoklaven. Dann wird dreimal evakuiert und Wasserstoff aufgepresst und schliesslich ein Wasserstoffdruck von 4·10⁶ Pa eingestellt. Danach rührt man bei 30 °C und verfolgt den Verlauf der Hydrierung über den Druckabfall. Der Umsatz wird gaschromatographisch bestimmt. Der Katalysator wird abfiltriert und anschliessend von der Reaktionslösung das Lösungsmittel im Vakuum am Rotationsverdampfer entfernt. Das Rohprodukt wird durch Flash-Chromatograpie (Silikagel, Hexan/Essigsäuremethylester 1:1) gereinigt und der Enantiomerenüberschuss polarometrisch bestimmt (Drehwert des (S)-Enantiomer [α]₃₆₅ bei 20 °C-130,5°, c=3 in Hexan). Der Umsatz beträgt nach 12 Stunden 99,3 %, ee 61,9 %.
Wiederverwendung des Katalysators: Vom Reaktionsgemisch wird die überstehende Lösung vom abgesetzten Katalysator abgetrennt, die gleiche Menge Ketimin und Tetra-n-butylammoniumiodid wie zuvor zugegeben und wie zuvor beschrieben verfahren. Der Umsatz beträgt nach 28 Stunden 99,7 %, ee 59,9 %.

### Beispiel C2: Hydrierung mit in situ hergestelltem Ir-Katalysator.

155 mg (0,0105 mmol) Trägermaterial gemäss Beispiel B2 werden unter Argon in einen Kolben eingewogen. In einem zweiten Kolben werden 0,0052 mmol [Ir(Cyclooctadien)Cl]₂ und 0,016 mmol Tetra-n-butylammoniumiodid unter Argon in 2 ml Methanol/Benzol (1:1) gelöst, zum Trägermaterial im ersten Kolben zugetropft und bis zur Entfärbung der Lösung gerührt. Dann lässt man ebenfalls unter Argon eine Lösung von 103 3 mg (5,4 mmol) N-(2,6-Dimethylphen-1-yl)-methoxymethyl-methylketimin (Reinheit 98.5%) in 5 ml Methanol/Benzol (1:1) zutropfen und presst das Gemisch in einen Stahlautoklaven. Die Hydrierung erfolgt bei einem Wasserstoffdruck von 4·10⁶ Pa und 30 °C. Nach 19 Stunden wird die Hydrierung unterbrochen und der Autoklav unter Argon gesetzt. Die Reaktionslösung über dem abgesetzten Katalysator wird mit einer Spritze abgezogen und gemäss Beispiel C1 aufgearbeitet. Der Umsatz beträgt 92,5 %, ee 62,2%.
Wiederverwendeung des Katalysators: Nach Zugabe einer Lösung von 5,4 mmol Ketimin und 0,016 mmol Tetra-N-butylammoniumiodid in 7 ml Methanol/Benzol (1:1) wird wie in der vorherigen Reaktion weiterhydriert. Nach 23 Stunden wird die Hydrierung unterbrochen obwohl der Katalysator immer noch mit konstanter Aktivität hydriert. Der Umsatz beträgt 59,1%, der ee 59,7%.

### Beispiel C3: Hydrierung mit Rhodium-Katalysator

182 mg (0,0156 mmol) Trägermaterial gemäss Beispiel B2 werden unter Argon in einen Rundkolben eingewogen und in einem zweiten Rundkolben werden 0,0125 mmol [Rh(Cyclooctadien)₂]BF₄ unter Argon in 1 ml Methanol gelöst und dann zum Trägermaterial im ersten Rundkolben getropft. Danach rührt man bis zur Entfärbung der Lösung. Zu diesem Gemisch gibt man unter Argon eine Lösung von 2,5 mmol (Z)-Acetamidozimtsäuremethylester in 17,5 ml Methanol und 4 ml Tetrahydrofuran, evakuiert und spült dreimal mit Wasserstoff und stellt den Wasserstoffdruck auf 10⁵ Pa ein. Danach wird kräftig gerührt. Der Umsatz beträgt nach 15 Minuten 100 %, ee 67,4 %.
Wiederverwendung des Katalysators: Die Reaktionslösung wird vom abgesetzten Katalysator abgezogen. Dann wird eine Lösung von 2,5 mmol (Z)-Acetamidozimtsäuremethylester in 17,5 ml Methanol und 5 ml Tetrahydrofuran zugegeben, das Gemisch wieder dreimal evakuiert und mit Wasserstoff gespült, der Wasserstoffdruck auf 10⁵ Pa eingestellt und schliesslich kräftig gerührt. Der Umsatz beträgt nach 10 Minuten 100 %, ee 69,6 %.

## Patentansprüche

1. Verbindungen der Formel I 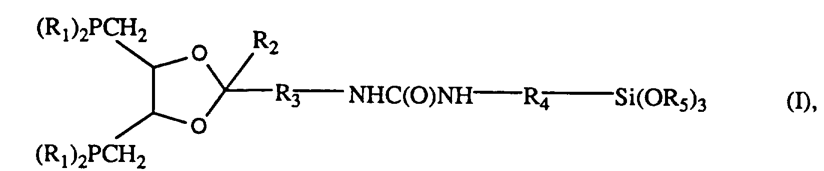 worin die R₁ gleiche oder verschiedene Reste darstellen und für lineares oder verzweigtes C₁-C₁₂-Alkyl, unsubstituiertes oder mit C₁-C₄-Alkyl oder C₁-C₄-Alkoxy substituiertes C₅- oder C₆-Cycloalkyl, Phenyl oder Benzyl steht, oder beide R₁ einer Gruppe (R₁)₂P zusammen für o,o'--Diphenylen stehen, R₂ Wasserstoff, lineares oder verzweigtes C₁-C₁₂-Alkyl, Phenyl oder Benzyl darstellt, R₃ C₁-C₁₂-Alkylen bedeutet, R₄ C₂-C₁₈-Alkylen, Phenylen oder Benzylen darstellt, und R₅ C₁-C₆-Alkyl oder Phenyl bedeutet.

2. Verbindungen gemäss Anspruch 1, worin R₁ in Formel I für Phenyl steht.

3. Verbindungen gemäss Anspruch 1, worin in Formel I R₂ als Alkyl 1 bis 6 C-Atome enthält.

4. Verbindungen gemäss Anspruch 1, worin in Formel I R₃ lineares oder verzweigtes C₁-C₈-Alkylen darstellt.

5. Verbindungen gemäss Anspruch 1, worin in Formel I R₄ lineares oder verzweigtes C₂-C₁₂-Alkylen darstellt.

6. Verbindungen gemäss Anspruch 1, worin in Formel IR₅ Methyl oder Ethyl bedeutet.

7. Verbindungen gemäss Anspruch 1, dadurch gekennzeichnet, dass sie in Form der optischen R,R- oder S,S-Isomeren vorliegen, bezogen auf die Stellung der Phosphin(methyl)-Gruppen.

8. Verbindungen gemäss Anspruch 1, dadurch gekennzeichnet, dass in Formel I R₁ Phenyl, R₂ Methyl oder Ethyl, R₃ lineares C₂-C₄-Alkylen, R₄ lineares C₃-C₆-Alkylen und R₅ Methyl oder Ethyl darstellen.

9. Verfahren zur Herstellung von Verbindungen der Formel I gemäss Anspruch 1, dadurch gekennzeichnet, dass man eine Verbindung der Formel II
(R₅O)₃Si-R₄-NCO (II),
worin R₄ und R₅ die zuvor angegebenen Bedeutungen haben, mit einer Verbindung der Formel III 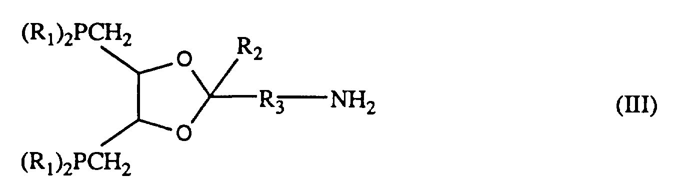 umsetzt, worin R₁, R₂ und R₃ die zuvor angegebenen Bedeutungen haben.

10. Trägermaterial, das an der Oberfläche chirale Diphosphin-Rhodium- oder -Iridiumkomplexe gebunden enthält, dadurch gekennzeichnet, dass es den Formeln IV und IVa entspricht, 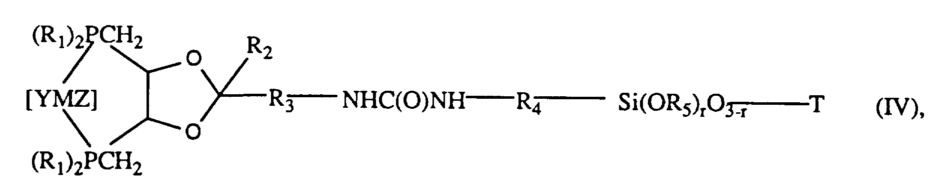 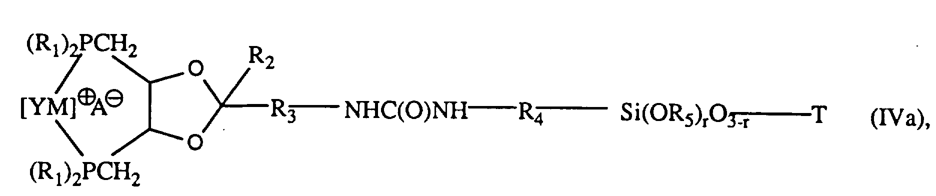 worin Y für zwei Monoolefinliganden oder einen Dienliganden steht, M Ir(I) oder Rh(I) bedeutet, Z -Cl, -Br oder -I darstellt, A^{⊖} das Anion einer Sauerstoffsäure oder Komplexsäure ist, T für ein festes Trägermaterial steht, r 0, 1 oder 2 darstellt, und R₁, R₂, R₃, R₄,und R₅ die in Anspruch 1 angegebenen Bedeutungen haben.

11. Trägermaterial gemäss Anspruch 10, worin Y in den Formeln IV und IVa für 1,5-Hexadien, 1,5-Cyclooctadien oder Norbornadien steht.

12. Trägermaterial gemäss Anspruch 10, worin Z in Formel IV für -Cl oder -Br steht.

13. Trägermaterial gemäss Anspruch 10, worin A^{⊖} in Formel IVa für ClO₄ ^{⊖}, CF₃SO₃ ^{⊖} , BF₄ ^{⊖}, B(Phenyl)₄ ^{⊖} , PF₆ ^{⊖}, SbCl₆ ^{⊖}, AsF₆ ^{⊖} oder SbF₆ ^{⊖} steht.

14. Trägermaterial gemäss Anspruch 10, worin es sich bei dem Träger um ein Glas, Silikat oder ein Halbmetall- oder Metalloxid handelt.

15. Trägermaterial gemäss Anspruch 14, dadurch gekennzeichnet, dass es sich um Pulver handelt.

16. Trägermaterial gemäss Anspruch 14, dadurch gekennzeichnet, dass es sich bei dem Träger T in den Formeln IV und IVa um ein Silikagel, ein Aerosil, ein Aluminiumoxid, ein Titanoxid oder Gemische davon handelt.

17. Verfahren zur Herstellung eines festen Trägermaterials der Formeln IV und IVa gemäss Anspruch 10, dadurch gekennzeichnet, dass man ein festes Trägermaterial, das an der Oberfläche Diphoshine gebunden enthält und das der Formel V entspricht, 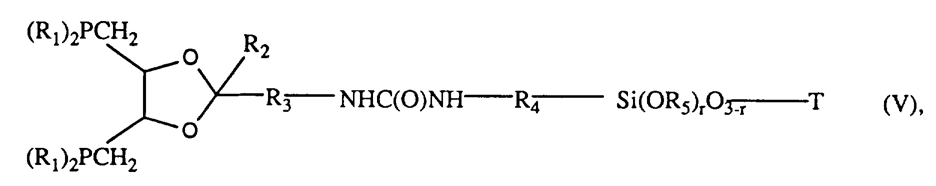 worin R₁, R₂, R₃, R₄, R₅, T und r die in Anspruch 10 angegebenen Bedeutungen haben, mit einer Metallverbindung der Formeln [M(Y)Z]₂ oder M(Y)₂ ^{⊕}A^{⊖} umsetzt, worin M, Y, Z und A^{⊖} die in Anspruch 10 angegebenen Bedeutungen haben.

18. Festes modifiziertes Trägermaterial der Formel V, 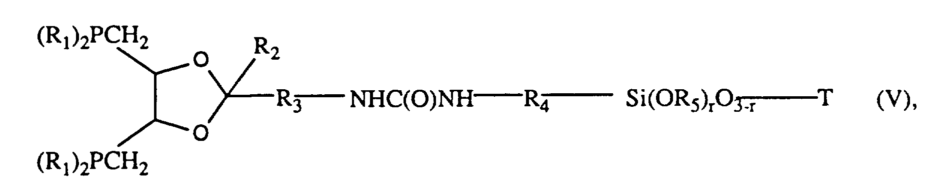 worin R₁, R₂, R₃, R₄, R₅, T und r die in Anspruch 10 angegebenen Bedeutungen haben.

19. Verwendung des festen Trägermaterials der Formeln IV und IVa gemäss Anspruch 10 als heterogene Katalysatoren zur asymmetrischen Hydrierung von prochiralen Verbindungen mit Kohlenstoff- oder Kohlenstoff-/Heteroatomdoppelbindungen.

20. Verwendung gemäss Anspruch 19 zur Hydrierung von unsymmetrischen Kohlenstoffdoppelbindungen, Ketiminen und Ketonen.

21. Verfahren zur asymmetrischen Hydrierung von Verbindungen mit Kohlenstoff- oder Kohlenstoff-/Heteroatomdoppelbindungen, dadurch gekennzeichnet, dass man die Verbindungen bei einer Temperatur von -20 bis 80 °C und einem Wasserstoffdruck von 10⁵ bis 10⁷ Pa in Gegenwart katalytischer Mengen eines festen Trägermaterials der Formeln IV oder IVa gemäss Anspruch 10 hydriert.

22. Trägermaterialien der Formeln VI und VIa, 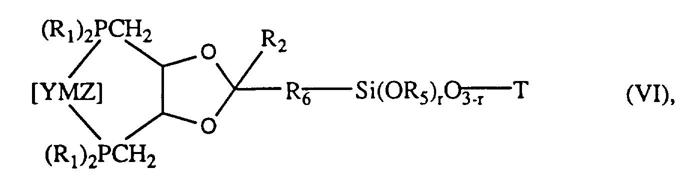 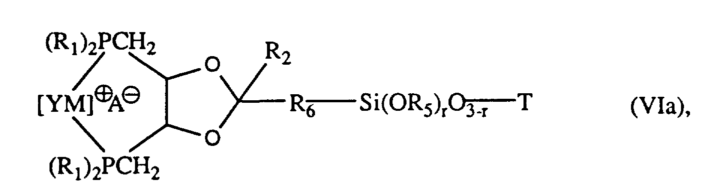 worin R₁, R₂, R₅, T, Y, Z, A^{⊖} und r die in Anspruch 10 angegebenen Bedeutungen haben, M für Iridium(I) und R₆ für lineares oder verzweigtes C₂-C₁₈-Alkylen stehen.

23. Verwendung des festen Trägermaterials der Formeln VI und VIa gemäss Anspruch 22 als heterogene Katalysatoren zur asymmetrischen Hydrierung von prochiralen N-Arylketiminen zu optisch aktiven sekundären Aminen.

24. Verfahren zur asymmetrischen Hydrierung von prochiralen N-Arylketiminen zu optisch aktiven sekundären Aminen, dadurch gekennzeichnet dass man die N-Arylketimine bei einer Temperatur von -20 bis 80 °C und einem Wasserstoffdruck von 10⁵ bis 10⁷ Pa in Gegenwart katalytischer Mengen eines festen Trägermaterials der Formeln VI oder VIa gemäss Anspruch 22 hydriert.

25. Verbindungen der Formel III, 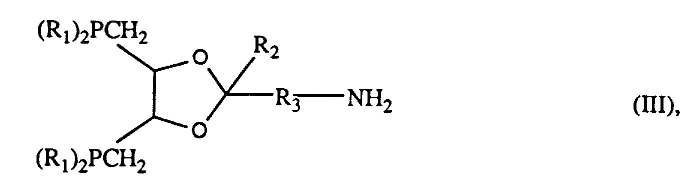 worin R₁, R₂ und R₃ die in Anspruch 1 angegebenen Bedeutungen haben.

## Claims

1. A compound of formula I 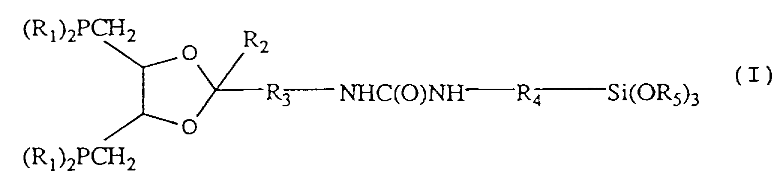 wherein R₁ denotes identical or different radicals and is linear or branched C₁-C₁₂alkyl, unsubstituted C₅-C₆cycloalkyl or C₅-C₆cycloalkyl which is substituted by C₁-C₄alkyl or C₁-C₄alkoxy, or is phenyl or benzyl, or the two substituents R₁ of a group (R₁)₂P together are o,o'-diphenylene, R₂ is hydrogen, linear or branched C₁-C₁₂alkyl, phenyl or benzyl, R₃ is C₁-C₁₂alkylene, R₄ is C₂-C₁₈alkylene, phenylene or benzylene, and R₅ is C₁-C₆alkyl or phenyl.

2. A compound according to claim 1, wherein R₁ in formula I is phenyl.

3. A compound according to claim 1, wherein in formula I R₂ as alkyl contains from 1 to 6 carbon atoms.

4. A compound according to claim 1, wherein in formula I R₃ is linear or branched C₁-C₈alkylene.

5. A compound according to claim 1, wherein in formula I R₄ is linear or branched C₂-C₁₂alkylene.

6. A compound according to claim 1, wherein in formula I R₅ is methyl or ethyl.

7. A compound according to claim 1 which is in the form of the optical R,R- or S,S-isomer, with respect to the position of the phosphine(methyl) groups.

8. A compound according to claim 1, wherein in formula I R₁ is phenyl, R₂ is methyl or ethyl, R₃ is linear C₂-C₄alkylene, R₄ is linear C₃-C₆alkylene and R₅ is methyl or ethyl.

9. A process for the preparation of a compound of formula I according to claim 1, which comprises reacting a compound of formula II
(R₅O)₃Si-R₄-NCO (II),
wherein R₄ and R₅ are as previously defined, with a compound of formula III 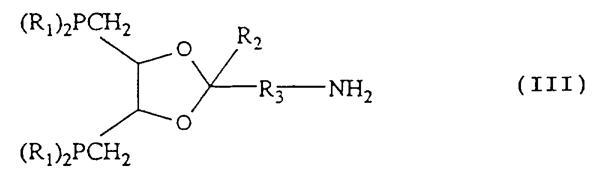 wherein R₁, R₂ and R₃ are as previously defined.

10. A carrier material which contains a chiral diphosphinerhodium or -iridium complex fixed on the surface thereof, which carrier material has the formula IV or IVa 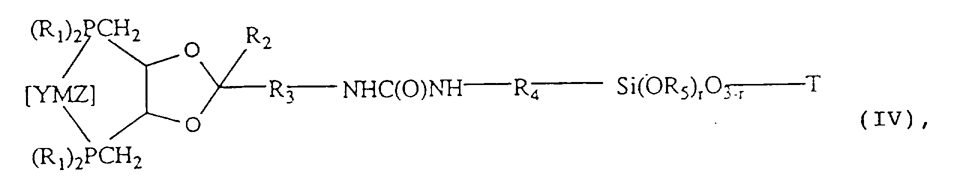 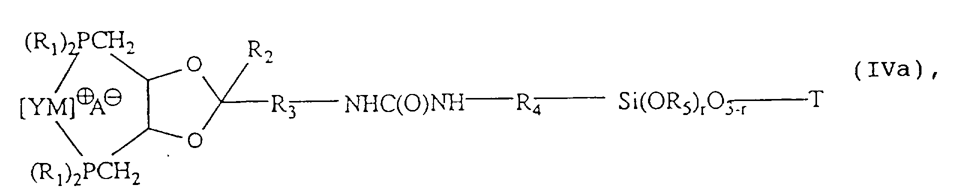 wherein Y denotes two monoolefin ligands or a diene ligand, M is Ir(I) or Rh(I), Z is -Cl, -Br or -I, A^{⊖} is the anion of an oxyacid or complex acid, T is a solid carrier material, r is 0, 1 or 2, and R₁, R₂, R₃, R₄ and R₅ are as defined in claim 1.

11. A carrier material according to claim 10, wherein Y in formulae IV and IVa is 1,5-hexadiene, 1,5-cyclooctadiene or norbornadiene.

12. A carrier material according to claim 10, wherein Z in formula IV is -Cl or -Br.

13. A carrier material according to claim 10, wherein A^{⊖} in formula IVa is ClO₄ ^{⊖}, CF₃SO₃ ^{⊖} , BF₄ ^{⊖}, B(phenyl)₄ ^{⊖}, PF₆ ^{⊖}, SbCl₆ ^{⊖}, AsF₆ ^{⊖} or SbF₆ ^{⊖}.

14. A carrier material according to claim 10, wherein the carrier is a glass, a silicate or a semimetal oxide or a metal oxide.

15. A carrier material according to claim 14 which is a powder.

16. A carrier material according to claim 14, wherein the carrier T in formulae IV and IVa is a silica gel, an aerosil, an alumina, a titanium oxide or a mixture thereof.

17. A process for the preparation of a solid carrier material of formula IV or IVa according to claim 10, which comprises reacting a solid carrier material which contains diphosphines Fixed on the surface thereof and has the formula V 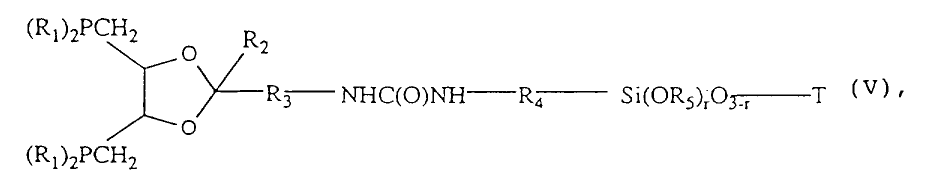 wherein R₁, R₂, R₃, R₄, R₅, T and r are as defined in claim 10, with a metal compound of formula [M(Y)Z]₂ or M(Y)₂ ^{⊕}A^{⊖}, wherein M, Y, Z and A^{⊖} are as defined in claim 10.

18. A solid modified carrier material of formula V 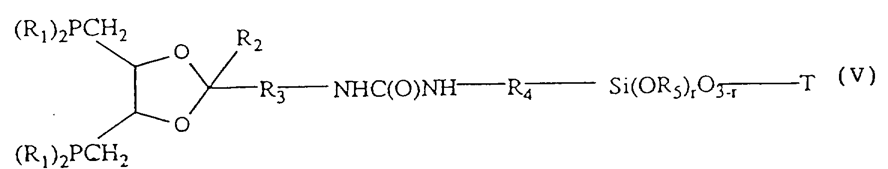 wherein R₁, R₂, R₃, R₄, R₅, T and r are as defined in claim 10.

19. Use of the solid carrier material of formula IV or IVa according to claim 10 as a heterogeneous catalyst for the asymmetrical hydrogenation of a prochiral compound containing carbon double bonds or carbon/hetero atom double bonds.

20. Use according to claim 19 for hydrogenating unsymmetrical carbon double bonds, ketimines and ketones.

21. A process for the asymmetrical hydrogenation of a compound containing carbon double bonds or carbon/hetero atom double bonds, which comprises hydrogenating said compound at a temperature of from -20 to +80°C and under a hydrogen pressure of from 10⁵ to 10⁷ Pa in the presence of a catalytic amount of a solid carrier material of formula IV or IVa according to claim 10.

22. A carrier material of formula VI or VIa 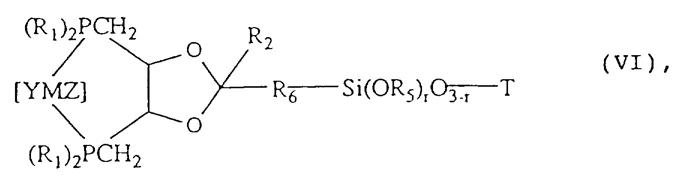 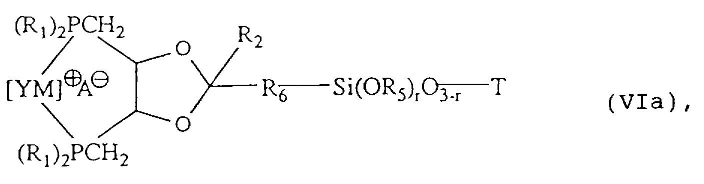 wherein R₁, R₂, R₅, T, Y, Z, A^{⊖} and r are as defined in claim 10, M is iridium(I) and R₆ is linear or branched C₂-C₁₈alkylene.

23. Use of the solid carrier material of formula VI or VIa according to claim 22 as a heterogeneous catalyst for the asymmetrical hydrogenation of a prochiral N-arylketimine to an optically active secondary amine.

24. A process for the asymmetrical hydrogenation of a prochiral N-arylketimine to an optically active secondary amine, which comprises hydrogenating the N-arylketimine at a temperature of from -20 to +80°C and under a hydrogen pressure of from 10⁵ to 10⁷ Pa in the presence of a catalytic amount of a solid carrier material of formula VI or VIa according to claim 22.

25. A compound of formula III 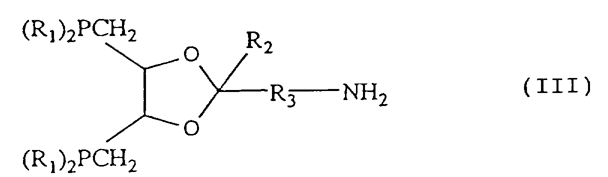 wherein R₁, R₂ and R₃ are as defined in claim 1.

## Revendications

1. Composés de formule I 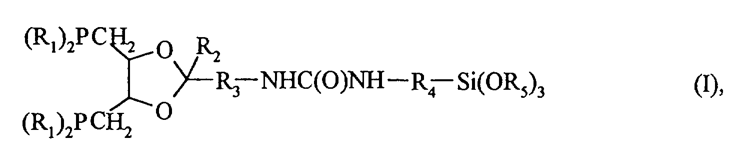 dans laquelle les R₁ représentent des restes identiques ou différents et sont des restes alkyle en C₁-C₁₂ linéaire ou ramifié, cycloalkyle en C₅ ou C₆ non substitué ou substitué par alkyle en C₁-C₄ ou alcoxy en C₁-C₄, phényle ou benzyle, ou les deux R₁ d'un groupe (R₁)₂P représentent ensemble un o,o'-diphénylène, R₂ représente un atome d'hydrogène ou un reste alkyle en C₁-C₁₂ linéaire ou ramifié, phényle ou benzyle, R₃ représente un reste alkylène en C₁-C₁₂, R₄ est un reste alkylène en C₂-C₁₈, phénylène ou benzylène, et R₅ représente un reste alkyle en C₁-C₆ ou phényle.

2. Composés selon la revendication 1, dans lesquels, dans la formule I, R₁ représente un reste phényle.

3. Composés selon la revendication 1 dans lesquels, dans la formule I, R₂ contient en tant qu'alkyle 1 à 6 atomes de carbone.

4. Composés selon la revendication 1, dans lesquels, dans la formule I, R₃ représente un reste alkylène en C₁-C₈ linéaire ou ramifié.

5. Composés selon la revendication 1, dans lesquels, dans la formule I, R₄ représente un reste alkylène en C₂-C₁₂ linéaire ou ramifié.

6. Composés selon la revendication 1, dans lesquels, dans la formule I, R₅ représente un reste méthyle ou éthyle.

7. Composés selon la revendication 1, caractérisés en ce qu'ils se présentent sous forme des isomères optiques R,R ou S,S par rapport à la position des groupes phosphinométhyle.

8. Composés selon la revendication 1, caractérisés en ce que, dans la formule I, R₁ représente un reste phényle, R₂ est un reste méthyle ou éthyle, R₃ est un reste alkylène linéaire en C₂-C₄, R₄ représente un reste alkylène linéaire en C₃-C₆ et R₅ est un reste méthyle ou éthyle.

9. Procédé de préparation de composés de formule I selon la revendication 1, caractérisé en ce que l'on fait réagir un composé de formule II
(R₅O)₃Si-R₄-NCO (II)
dans laquelle R₄ et R₅ ont les significations données précédemment, avec un composé de formule III 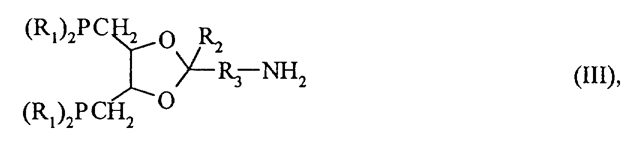 dans laquelle R₁, R₂ et R₃ ont les significations données précédemment.

10. Support sur la surface duquel sont liés des complexes chiraux de diphosphine-rhodium ou de diphosphine-iridium, caractérisé en ce qu'il correspond aux formules IV et IVa 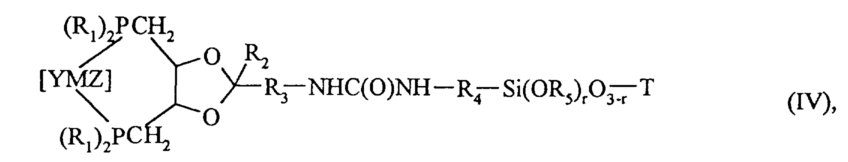 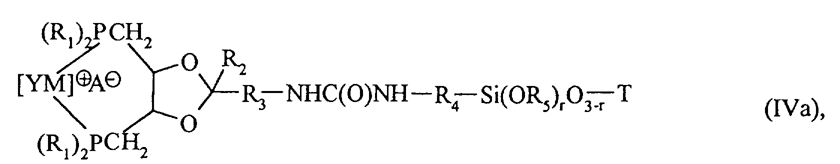 dans lesquelles Y représente deux ligands monooléfiniques ou un ligand diène, M est Ir(I) ou Rh(I), Z représente Cl, Br ou I, A^{⊖} est l'anion d'un acide oxygéné ou d'un acide complexe, T représente un support solide, r est 0, 1 ou 2, et R₁, R₂, R₃, R₄ et R₅ ont les significations indiquées dans la revendication 1.

11. Support selon la revendication 10, dans lequel, dans les formules IV et [Va, Y représente un reste 1,5-hexadiène, 1,5-cyclooctadiène ou norbornadiène.

12. Support selon la revendication 10, dans lequel, dans la formule IV, Z est Cl ou Br.

13. Support selon la revendication 10, dans lequel, dans la formule IVa, A^{⊖} est ClO₄ ^{⊖}, CF₃SO₃ ^{⊖} , BF₄ ^{⊖}, B(phényl)₄ ^{⊖}, PF₆ ^{⊖}, SbCl₆ ^{⊖}, AsF₆ ^{⊖} ou SbF₆ ^{⊖}.

14. Support selon la revendication 10, dans lequel le support est un verre, un silicate ou un oxyde de métal ou de non-métal.

15. Support selon la revendication 14, caractérisé en ce qu'il s'agit d'une poudre.

16. Support selon la revendication 14, caractérisé en ce que le support T dans les formules IV et IVa est un gel de silice, un aérosil, un oxyde d'aluminium, un oxyde de titane ou leurs mélanges.

17. Procédé de préparation d'un support solide de formule IV et IVa selon la revendication 10, caractérisé en ce que l'on fait réagir un support solide sur la surface duquel sont liées des diphosphines et qui correspond à la formule V 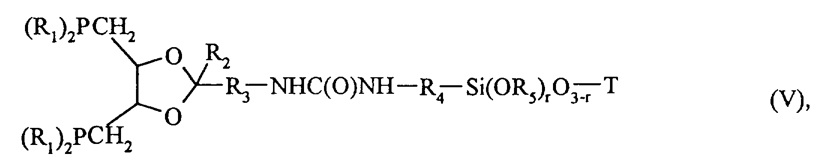 dans laquelle R₁, R₂, R₃, R₄, R₅, T et r ont les significations données dans la revendication 10, avec un composé métallique de formule [M(Y)Z]₂ ou M(Y)₂ ^{⊕}A^{⊖}, où M, Y, Z et A^{⊖} ont les significations indiquées dans la revendication 10.

18. Support solide modifié de formule V 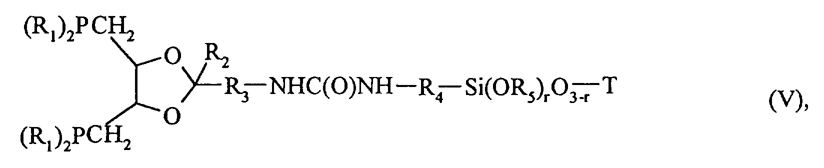 dans laquelle R₁, R₂, R₃, R₄, R₅, T et r ont les significations données dans la revendication 10.

19. Utilisation du support solide de formule IV et IVa selon la revendication 10 comme catalyseur hétérogène pour l'hydrogénation asymétrique de composés prochiraux contenant des doubles liaisons carbone-carbone ou carbone-hétéroatome.

20. Utilisation selon la revendication 19 pour l'hydrogénation de doubles liaisons asymétriques carbone-carbone, de cétimines et de cétones.

21. Procédé d'hydrogénation asymétrique de composés contenant des doubles liaisons carbone-carbone ou carbone-hétéroatome, caractérisé en ce que l'on hydrogène les composés à une température de -20 à 80°C et sous une pression d'hydrogène de 10⁵à 10⁷ Pa en présence de quantités catalytiques d'un support solide de formule IV ou IVa selon la revendication 10.

22. Supports ayant les formules VI et VIa 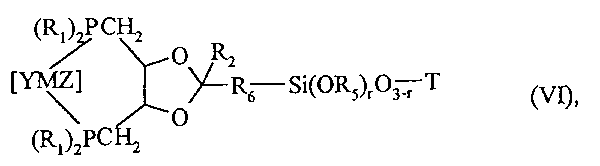 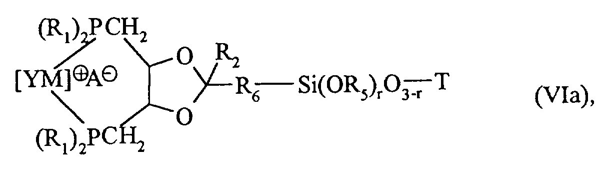 dans lesquelles R₁, R₂, R₅, T, Y, Z, A^{⊖} et r ont les significations données dans la revendication 10, M est l'iridium(I) et R₆ représente un reste alkylène en C₂-C₁₈ linéaire ou ramifié.

23. Utilisation du support solide de formule VI et VIa selon la revendication 22 comme catalyseur hétérogène pour l'hydrogénation asymétrique de N-arylcétimines prochirales en amines secondaires optiquement actives.

24. Procédé d'hydrogénation asymétrique de N-arylcétimines prochirales en amines secondaires optiquement actives, caractérisé en ce que l'on hydrogène les N-arylcétimines à une température de -20 à 80°C et sous une pression d'hydrogène de 10⁵ à 10⁷ Pa en présence de quantités catalytiques d'un support solide de formule VI ou VIa selon la revendication 22.

25. Composés de formule III 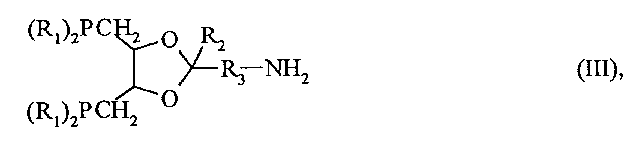 dans laquelle R₁, R₂ et R₃ ont les significations données dans la revendication 1.
